# EUROPÄISCHE PATENTSCHRIFT

(11) **EP 0 526 600 B1**
(45) Veröffentlichungstag und Bekanntmachung des Hinweises auf die Patenterteilung: **27.07.1994**
(21) Anmeldenummer: 92903011.2
(22) Anmeldetag: 17.01.1992
(51) Int. Cl.: G01L 9/00, G01L 9/06, G01L 23/18

(54) **DRUCKGEBER ZUR DRUCKERFASSUNG IM BRENNRAUM VON BRENNKRAFTMASCHINEN**
PRESSURE SENSOR FOR DETERMINING THE PRESSURE IN THE COMBUSTION CHAMBER OF AN INTERNAL COMBUSTION ENGINE
CAPTEUR DE PRESSION POUR LA MESURE DE PRESSION DANS LA CHAMBRE D'EXPLOSION D'UN MOTEUR A COMBUSTION INTERNE

(30) Priorität: 27.02.1991 DE 4106102
(43) Veröffentlichungstag der Anmeldung: 10.02.1993
(73) Patentinhaber: ROBERT BOSCH GMBH, 70442 Stuttgart (DE)
(72) Erfinder: VOGEL, Manfred, D-7257 Ditzingen-Heimerdingen (DE); HERDEN, Werner, D-7016 Gerlingen (DE); MAREK, Jiri, D-7410 Reutligen 22 (DE); WEIBLEN, Kurt, D-7430 Metzingen 2 (DE)
(86) Internationale Anmeldenummer: DE9200024
(87) Internationale Veröffentlichungsnummer: WO9215851

(56) Entgegenhaltungen:
- EP-A- 0 251 592
- EP-A- 0 352 773
- FR-A- 2 626 670
- GB-A- 2 144 857
- GB-A- 2 207 804
- Sensors and Actuators - A Physical, Bd. A 21, Nr. 1/3, 1. April 1990, Lausanne, CH, Seiten 79-83: S. Ansermet et al.: "Cooperative development of a piezoresistive pressure sensor with integrated signal conditioning for automotive and industrial applications"
- IEEE Journal of Solid-State Circuits, Bd. SC-22, Nr. 2, 1. April 1987, NY, US, Seiten 151-156: T. Ishihara et al.: "CMOS Integrated silicon pressure sensor"

## Beschreibung

### Stand der Technik

Aus der EP-A2-0 251 592, insbesondere der Figuren 9, 9b und 9d ist ein Drucksensor bekannt, bei dem die Meßelemente auf einem Siliziumchip angeordnet sind. Zur Druckeinleitung ist zwischen der Membran und dem Siliziumchip ein Stempel angeordnet. Der Stempel liegt auf dem Siliziumchip in einem Bereich zwischen den in einer Brückenschaltung angeordneten Widerständen auf. Aus den Widerständen sind aber auf dem Siliziumchip keine weiteren elektrischen Bauteile angeordnet, vielmehr wird das Meßsignal mit Hilfe von Bondverbindungen und sonstigen Leitungen zur Weiterverarbeitung aus dem Gehäuse des Drucksensors herausgeführt.

Auch aus der EP-A2-0 352 773 ist ein Drucksensor bekannt, bei dem der herrschende Druck wiederum über eine Membran und einen Stempel auf ein Meßelement eingeleitet wird. Die Meßelemente befinden sich auf einem Siliziumchip. Auf diesem Siliziumchip sind aber keine weiteren elektrischen Bauteile angeordnet, vielmehr werden die erzeugten Meßsignale mit Hilfe von elektrischen Leitungen einer außerhalb des Drucksensors angeordneten Schaltung zugeführt.

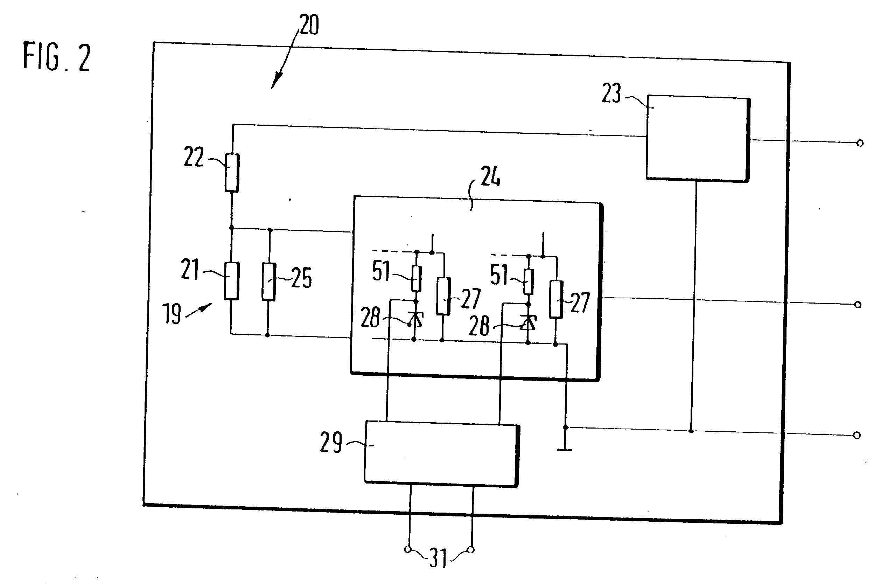

Aus dem Artikel von T. Ischiara et al. "CMOS Integrated Silicon Pressure Sensor" in I.E.E.E. Journal of Solid State Circuits, SC-22 (1987) April, No. 2, New York, USA, Seiten 151 bis 156 ist zwar in der Figur 2 eine Schaltung dargestellt, die das Meßsignal verstärkt und gleichzeitig auf dem Siliziumchip mit angeordnet ist. Hinweise auf die Möglichkeit eines Abgleichs mehrerer Funktionen mit Hilfe eines ebenfalls auf dem Siliziumchip befindlichen Netzwerkes sind aber nicht entnehmbar.

Bei dem aus der DE-OS 31 25 640.6 bekannten Druckgeber, sind die piezoresistiven Meßelemente, wie zum Beispiel Dickschichtwiderstände aus Cermet, Contactiv-Plastik oder Metall auf einem Träger aufgebracht. Das Widerstandselement und der Träger sind möglichst nahe am Druckraum angeordnet, um den herrschenden Druck bestimmen zu können. Ferner wird das Meßsignal mit Hilfe von elektrischen Leitungen zu einer außerhalb des Gehäuses des Druckgebers angeordneten elektronischen Auswerteschaltung geführt. Dadurch müssen die piezoresistiven Elemente und die elektronischen Bauteile mit Hilfe von abgeschirmten Leitungen aufwendig miteinander verbunden werden. Da das piezoresistive Meßelement direkt dem Druck ausgesetzt ist, ist es auch den im Brennraum herrschenden hohen Temperaturen ausgesetzt. Die Flammen breiten sich dort mit einer Temperatur von ca. 2000° C aus, wodurch sich Verspannungen im Gehäuse ergeben können. Dadurch wird das Drucksignal durch die hohen Temperaturen verfälscht.

Ferner wird in der US-PS 4 645 965 ein Drucksensor beschrieben, dessen Meßelement aus piezoelektrischem Material besteht. Als piezoelektrische Elemente können zum Beispiel piezokeramische Elemente verwendet werden, die durch eine aufwendige Verschweißung von Drähten mit Kontaktscheiben kontaktiert werden können. Bei piezoelektrischen Elementen wird im Unterschied zu piezoresistiven Elementen bei Druckeinwirkung zur Meßsignalerzeugung eine Ladung und somit eine Spannung erzeugt. Diese Spannung wird abgegriffen und ausgewertet. Im Unterschied hierzu wird bei piezoresistiven Elementen eine Spannung angelegt, und der elektrische Widerstand im piezoresistiven Element wird durch den einwirkenden Druck verändert.

### Vorteile der Erfindung

Der erfindungsgemäße Drucksensor mit den Merkmalen des Anspruchs 1 hat demgegenüber den Vorteil, daß auf dem monokristallinen Silizium-Chip die piezoresistiven Meßelemente und die Aufbereitungselektronik in äußerst platzsparender und kompakter Bauart angeordnet werden können. Die Empfindlichkeit des Sensors kann im fertig montierten Zustand von außen eingestellt werden. Hierbei ist im Unterschied zum bisherigen Stand der Technik kein Laserabgleich mehr notwendig.

Durch die in den Unteransprüchen aufgeführten Maßnahmen sind vorteilhafte Weiterbildungen des im Hauptanspruch angegebenen Sensors möglich.

### Zeichnung

Ein Ausführungsbeispiel der Erfindung ist in der Zeichnung dargestellt und in der nachfolgenden Beschreibung näher erläutert. Die Figur 1 zeigt einen Schnitt durch einen Druckgeber, Figur 2 eine Einzelheit, die Figuren 3a und 3b eine Abwandlung der Einzelheit im Schnitt und in Draufsicht und die Figur 4 einen Schnitt durch eine weitere Abwandlung der Einzelheit.

### Beschreibung des Ausführungsbeispiels

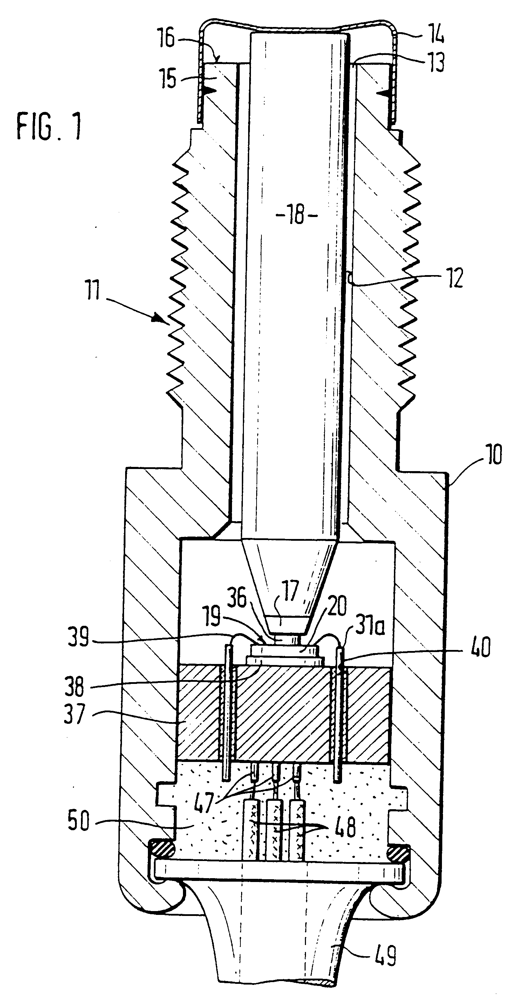

In der Figur 1 ist mit 10 das Gehäuse eines Drucksensors 11 zur Bestimmung des Drucks im Brennraum einer Brennkraftmaschine bezeichnet. Es weist eine mittige, durchgehende, abgesetzte Bohrung 12 auf. Die dem Brennraum zugewandte Öffnung 13 des Gehäuses 10 wird von einer Membran 14 abgeschlossen. Die Membran 14 ist als sogenannte Kappenmembran ausgebildet, wobei der Rand der Membran umgebogen und über das Ende des Schafts 15 des Gehäuses 10 geschoben ist und dort festgeschweißt ist. Die Membran 14 sitzt dadurch fest am Gehäuse 10, liegt aber, um eine Beweglichkeit der Membran 14 zu gewährleisten nicht direkt an der Stirnseite 16 des Schafts 15 an. Der Biegebereich der Membran 14 kann sich dadurch frei bewegen. Die Membran kann aber auch in anderer Weise, wie zum Beispiel durch einen Schnappverschluß am Schaft 15 des Gehäuses 10 befestigt werden. Besonders vorteilhaft ist die Membran 14 aus einer Superlegierung, das heißt aus einer Legierung von zum Beispiel ca. 50 % Ni, 20 % Cr, 20 % Fe ausgebildet. Am mittleren Bereich der Membran 14 liegt ein Stempel 18 mit seinem einen Ende an, der mit seinem anderen Ende an dem piezoresistiven Meßelement 19 eines monokristallinen Silizium (Si)-Chips 20 anliegt. Unter piezoresistiven Meßelementen sind Elemente zu verstehen, die ihren Widerstandswert unter Druckeinwirkung ändern. Das Meßelement 19 besteht aus einem durch Diffusion und sonstigen aus der Halbleitertechnik bekannten Verfahren hergestellten piezoresistiven Widerstand 21, auf den die Kraft des Stempels 18 orthogonal eingeleitet wird. Bei dem obengenannten Verfahren wird eine Dotierung der Siliziumplatte mit Fremdatomen erreicht. In der Praxis wird hierbei zum Beispiel Bor oder Phosphor verwendet. Ferner weist das Meßelement 19 einen zweiten, in unmittelbarer Nähe angeordneten Widerstand 22 auf (Figur 2), auf den aber kein Druck einwirkt.

Er ist, wie der Widerstand 21, in einem der obengenannten Verfahren hergestellt. Der Widerstand 22 ergänzt den Widerstand 21 zu einer sogenannten Halbbrückenschaltung. Gegebenenfalls können auch zwei weitere, also insgesamt drei Widerstände vorhanden sein, auf die kein Druck einwirkt, um somit eine Wheatstone'sche Vollbrückenschaltung zu erreichen. Ferner befindet sich auf dem Siliziumchip eine Stabilisatorschaltung 23, um das Meßelement 19 mit einer stabilisierten und entstörten Spannung oder einem Strom zu versorgen.Ferner greift an der Meßbrücke der Widerstände 21 und 22 eine Gleich- oder Wechselspannungsverstärkerschaltung 24 an, um das Meßsignal vom Millivoltbereich in den Voltbereich zu verstärken. Es könnte sich aber statt dessen auch auf dem Siliziumchip eine allgemein bekannte Regelschaltung mit einer Verstärkerwirkung befinden. In der Nähe der Meßbrücke des Meßelements 19 sind temperaturabhängige Widerstände 25 oder auch Halbleiterelemente angeordnet, um die Temperaturabhängigkeit der Brückenwiderstände sowie der Piezokoeffizienten der verwendeten piezoresistiven Elemente zu kompensieren. Ferner können sich auf dem Silizium-Chip ein Netzwerk aus Widerständen 27 und zum Beispiel parallel geschalteten Widerständen 51, die in Reihe gechaltet sind mit Zenerdioden 28, sowie logischen Elementen 29 zum Funktionsabgleich befinden. Hierzu sind von den logischen Elementen 29 zusätzliche Anschlüsse 31 vom Chip nach außen geführt, an denen so hohe Spannungen und Ströme angelegt werden, daß je nach Bedarf durch Anlegen von so hohen Spannungen und Strömen Zenerdioden 28 durchlegiert werden können und damit Widerstände 51 dem Netzwerk parallel gelegt werden können. Damit ist zum Beispiel beim Anlegen eines definierten Drucks an das Meßelement 19 sowohl der Nullpunkt als auch die Empfindlichkeit des Sensors elektrisch von außen her abgleichbar. Gegebenenfalls kann auch auf diese Weise der Temperaturgang über die temperaturabhängigen Widerstände 25 beeinflußt werden. Derartige Funktionsabgleiche sind bei bisher bekannten Drucksensoren nur durch Laserabgleich von Widerständen auf einem Dickschichthybrid möglich. Eine Dickschichtschaltung hat aber einen relativ großen Platzbedarf und bestimmt somit die äußere Abmessung des Sensors mit.

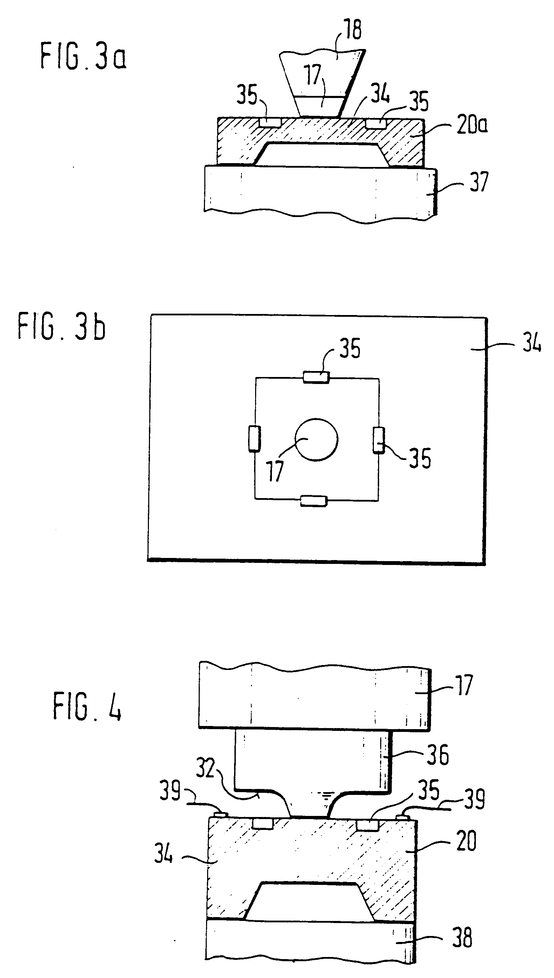

Bei der in der Figur 3 dargestellten Abwandlung des Meßelements sind auf einem dünnen, aus dem Siliziumkristall 20a herausgeätzten Bereich, der als Membran 34 dient, vier Widerstände 35 ausgebildet. Diese vier Widerstände 35 sind in einer Wheatstone'schen Brückenschaltung verschaltet, wobei die Kraft in die Mitte der Membran 34 eingeleitet wird und die Widerstände 35 dadurch Zug- oder Druckspannungen in longitudinaler oder transversaler Richtung erfahren. Im übrigen ist der Chip ausgebildet, wie in der Figur 2 dargestellt. Die Anordnung nach der Figur 3 wäre auch auf die Figur 1 analog übertragbar, so daß der Stempel 18 in der Mitte der Wheatstone'schen Brückenschaltung angreift - ohne auf einem der Widerstände aufzuliegen - und der Si-Chip 20 - wie in der Figur 1 dargestellt - keine herausgeätzte Membran aufweist.

Der Stempel 18 selbst kann aus Glaskeramik bestehen, um somit eine gute Wärmeisolierung zwischen der Membran, das heißt zwischen dem Druckraum, dessen Druck bestimmt werden soll und dem Meßelement 19 zu gewährleisten. Das dem Chip 20 zugewandte Ende des Stempels 18 kann konisch ausgebildet sein, so daß sein Ende etwa den Durchmesser des empfindlichen Widerstands des Meßelements 19 aufweist oder zentral auf einer Membran 34 bzw. im Zentrum der Wheatsteone'schen Brückenschaltung anliegen kann. Dadurch ist es möglich, den Stempel 18 in der Bohrung 12 zu führen, hingegen aber im Bereich der Druckübertragung auf die Größe des Meßelements 19 zu begrenzen. Um eine möglichst definierte Krafteinleitung vom Stempel 18 auf das Meßelement 19 zu gewährleisten, ist der Stempel 18 wenigstens im Endbereich 17 aus einem relativ weichen Werkstoff hergestellt. Dadurch ist es möglich, daß sich Oberflächenrauhigkeiten des Stempelendes nicht als Meßfehler im Meßwiderstand 21 des Meßelements 19 auswirken können, indem so ein Formschluß zwischen der Stirnfläche des Stempelendes und der Oberfläche des Meßelements 19 erreicht wird. Hierbei kann auf dem Chip 20 ein Zwischenelement 36 angeordnet sein. Dieses dient dazu, die Kraft des Stempels 18 sehr homogen und bei genau definierter Auflagefläche in das Meßelement 19 einzuleiten, ohne daß Meßelement 19 durch eine rauhe und unebene Oberfläche des Stempelendes zu zerstören oder zusätzliche Querspannungen im Meßelement 19 zu induzieren. Das Zwischenelement 36 kann vorteilhaft aus Borsilikat-Glas oder ebenfalls aus Silizium bestehen, da diese Werkstoffe im Wärmeausdehungskoeffizient an den Si-Chip angepaßt sind und zudem eine hohe Oberflächengüte aufweisen. Als Borsilikat-Glas kann der Werkstoff Pyrex der Firma Corning-Glass Works in US oder der Werkstoff Tempax der Firma Schott in Mainz (DE) verwendet werden. Das Zwischenelement 36 kann auch eine durch Ätzung herausgebildete sogenannte Höcker oder Mesastruktur 32 aufweisen, wie sie in Figur 4 dargestellt ist. Bei einer Mesastruktur liegt keine ebene Oberfläche mehr vor, sondern es sind Erhebungen und/oder Vertiefungen vorhanden. Bereits im Herstellungsprozeß kann z.B. der Wafer mit den Si-Chips mit dem geätzten Pyrex- oder Si-Wafer in Mesastruktur anodisch oder direkt zusammengebondet, das heißt mechanisch fest verbunden werden, und anschließend zersägt werden. Dadurch wird eine besonders hohe Justiergenauigkeit des Zwischenelements 36 erreicht.

Ferner wäre es auch denkbar, den gesamten Stempel 18 aus einem weichen Material herzustellen. Dadurch würde man aber wiederum die Steifigkeit des Stempels 18 negativ beeinflussen. Bei der Auswahl des Materials für den Stempel 18 ist zu berücksichtigen, daß der Stempel eine möglichst geringe Wärmeleitfähigkeit aufweisen soll, so daß die Meßsignale nicht durch Temperaturschwankungen oder durch eine Beeinflussung durch die Temperatur selbst verfälscht werden. Eine geringe Wärmeleitfähigkeit weist zum Beispiel Glaskeramik auf.

Als Material für den Bereich 17 des Stempels 18 kann zum Beispiel relativ weiches Metall, zum Beispiel Al, Messing, Cu, Kunststoff usw. verwendet werden. Das Material für den weichen Bereich braucht nicht auf die geringe Wärmeleitfähigkeit abgestimmt zu sein.

Der Chip 20 liegt an einem in die Bohrung 12 eingepreßten Gegenlager 37 entweder direkt an, oder ist mit diesem über einen Träger 28 verbunden. Der Träger 38 soll die Auswirkungen unterschiedlicher Ausdehungskoeffizienten zwischen dem Si-Chip 20 und dem Gegenlager 37 vermeiden. Als Trägerwerkstoff eignet sich vorteilhaft Si oder Borsilikat-Glas. Im Gegenlager 37 sind mehrere etwa achsparallel zur Bohrung 12 verlaufende, durchgehende Bohrungen 40 ausgebildet, in denen die von einer elektrisch isolierenden Glasmasse umgebenen Abgleichpins 31a und die Pins 47 für die elektrischen Anschlüsse geführt werden. Die Pins 31a und 47 sind über Bonddrähte 39 mit dem Si-Chip 20 verbunden. Die Leitungen 48 der Pins 47 sind in einer Tülle 49 zusammengefaßt. Zum Schutz vor schädlichen Umwelteinflüssen, wie zum Beispiel Feuchtigkeit, kann die Bohrung 12 im Bereich der Pins und der elektrischen Schaltungen mit einer Vergußmasse 50 ausgegossen sein.

## Patentansprüche

1. Druckgeber zur Druckerfassung im Brennraum von Brennkraftmaschinen, insbesondere von Kraftfahrzeugen, in dessen auf einer Seite von einer Membran (14) abgeschlossenen Gehäuse auf einem monokristallinen Silizium-Chip (20) angeordnet sind: mindestens ein aus einem piezoresistiven Werkstoff bestehendes Meßelement (19, 21, 35), zusätzliche, dieses Meßelement zu einer Brückenschaltung ergänzende Widerstände (22), eine Verstärkerschaltung (24) und wobei sich zwischen der Membran (14) und dem Meßelement (19, 21, 35) ein Stempel (18) befindet, der den zu bestimmenden Druck auf das Meßelement (21) einleitet, dadurch gekennzeichnet, daß zusätzlich auf dem Siliziumchip (20) sich befinden: Elemente zur Temperaturkompensation des Nullpunkts und der Empfindlichkeit, und mindestens ein logisches Netzwerk zum elektrischen Abgleich der Druckgeberkennlinie von außen her.

2. Druckgeber nach Anspruch 1, dadurch gekennzeichnet, daß mit dem Netzwerk (70) der Nullpunkt, die Empfindlichkeit, der Temperaturgang des Nullpunkts und der Temperaturgang der Empfindlichkeit abgeglichen werden können.

3. Druckgeber nach Anspruch 1, dadurch gekennzeichnet, daß das Netzwerk (70) aus mehreren Gruppen besteht, die mindestens einen Widerstand (51, 27) und mindestens ein Halbleiterbauteil (28), das durch Stromfluß durchlegierbar ist, aufweist.

4. Druckgeber nach Anspruch 3, dadurch gekennzeichnet, daß das Halbleiterbauteil (28) eine Zenerdiode ist.

5. Druckgeber nach einem der Ansprüche 1 bis 4, dadurch gekennzeichnet, daß auf dem Siliziumchip (20) zusätzlich eine digitale Auswahllogik (29) zur Auswahl eines der Elemente (27, 28, 51) der jeweiligen Gruppe des Netzwerks (70) angeordnet ist.

6. Druckgeber nach einem der Ansprüche 1 bis 5, dadurch gekennzeichnet, daß der monokristalline Siliziumchip (20) eine Stabilisierungsschaltung (23), insbesondere zur Versorgung der Brückenschaltung mit Strom oder Spannung, aufweist.

7. Druckgeber nach einem der Ansprüche 1 bis 6, dadurch gekennzeichnet, daß der Stempel (18) in etwa in der Mitte der Brückenschaltung anliegt.

8. Druckgeber nach einem der Ansprüche 1 bis 7, dadurch gekennzeichnet, daß der Bereich (34), in dem der Stempel anliegt, eine aus dem Silizium-Chip (20) herausgeätzte Membran ist.

9. Druckgeber nach einem der Ansprüche 1 bis 8, dadurch gekennzeichnet, daß ein Zwischenelement (36) zur Kraftübertragung auf das Meßelement (19, 21, 35) in der Mitte der Brückenschaltung direkt aufgebracht ist.

10. Druckgeber nach Anspruch 9, dadurch gekennzeichnet, daß das Zwischenelement (36) aus einem zweiten Siliziumchip besteht.

11. Druckgeber nach einem der Ansprüche 1 bis 10, dadurch gekennzeichnet, daß der Stempel (18) an dem dem Chip (20) zugewandten Ende aus einem relativ weichen Material besteht.

12. Druckgeber nach einem der Ansprüche 9 bis 11, dadurch gekennzeichnet, daß das Zwischenelement (36) durch einen direkten oder anodischen Bondprozeß mit dem Silizium-Chip (20) verbunden wird.

13. Druckgeber nach einem der Ansprüche 9 bis 12, dadurch gekennzeichnet, daß das Zwischenelement (36) eine Mesaätzung (32) aufweist.

14. Druckgeber nach einem der Ansprüche 1 bis 13, dadurch gekennzeichnet, daß der Stempel (18) aus Glaskeramik besteht.

## Claims

1. Pressure sensor for registering the pressure in the combustion chamber of internal combustion engines, in particular of motor vehicles, in the housing of which, being closed on one side by a membrane (14), the following are arranged on a monocrystalline silicon chip (20): at least one measuring element (19, 21, 35) consisting of a piezoresistive material, additional resistors (22) which augment this measuring element to form a bridge circuit, an amplifier circuit (24), and in which a plunger (18) is provided which introduces the pressure to be determined onto the measuring element (21), characterised in that the silicon chip (20) additionally carries: elements for temperature compensation of the zero point and the sensitivity, and at least one logical network for electrical balancing of the pressure sensor characteristic from outside.

2. Pressure sensor in accordance with claim 1, characterised in that the zero point, the sensitivity, the temperature stability of the zero point, and the temperature stability of the sensitivity, can be balanced by means of the network (70).

3. Pressure sensor in accordance with claim 1, characterised in that the network (70) consists of several groups which have at least one resistor (51, 27) and at least one semiconductor component (28) which may be shorted by current flow.

4. Pressure sensor in accordance with claim 3, characterised in that the semiconductor component (28) is a zener diode.

5. Pressure sensor in accordance with one of the claims 1 to 4, characterised in that the silicon chip (20) additionally carries a digital selection logic (29) for the selection of one of the elements (27, 28, 51) of the respective group of the network (70).

6. Pressure sensor in accordance with one of the claims 1 to 5, characterised in that the monocrystalline silicon chip (20) has a stabilising circuit (23), in particular for the supply of power to the bridge circuit.

7. Pressure sensor in accordance with one of the claims 1 to 6, characterised in that the plunger (18) lies approximately in the centre of the bridge circuit.

8. Pressure sensor in accordance with one of the claims 1 to 7, characterised in that the region (34) in which the plunger lies, is a membrane which has been etched out of the silicon chip (20).

9. Pressure sensor in accordance with one of the claims 1 to 8, characterised in that an intermediate element (36) for the pressure transmission to the measuring element (19, 21, 35) is directly attached to the centre of the bridge circuit.

10. Pressure sensor in accordance with claim 9, characterised in that the intermediate element (36) consists of a second Si chip.

11. Pressure sensor in accordance with one of the claims 1 to 10, characterised in that the end of the plunger (18) which faces the chip (20) consists of a relatively soft material.

12. Pressure sensor in accordance with one of the claims 9 to 11, characterised in that the intermediate element (36) is connected to the Si chip (20) by a direct or anodic bonding process.

13. Pressure sensor in accordance with one of the claims 9 to 12, characterised in that the intermediate element (36) has a mesa etching (32).

14. Pressure sensor in accordance with one of the claims 1 to 13, characterised in that the plunger (18) is made of glass ceramics.

## Revendications

1. Capteur de pression pour détecter la pression dans la chambre d'explosion d'un moteur à combustion interne, en particulier de véhicules à moteur, dans un boîtier fermé sur un côté par une membrane (14) sur lequel sont disposés sur une pastille de silicium monocristalline (20): au moins un élément de mesure (19, 21, 35) réalisé en une matière piézo-résistive, des résistances (22) complétant cet élément de mesure pour former un circuit en pont, un circuit d'amplification (24) et dans lequel se trouve un poinçon (18) entre la membrane (14) et l'élément de mesure (19, 21, 35), poinçon qui applique la pression à déterminer sur l'élément de mesure (21), caractérisé en ce que se trouvent en outre sur la pastille de silicium: des éléments servant à compenser la température du point neutre et la sensibilité et au moins un réseau logique servant au réglage électrique de la courbe caractéristique du capteur de pression à partir de l'extérieur.

2. Capteur de pression selon la revendication 1, caractérisé en ce que l'on peut régler avec le réseau le point neutre, la sensibilité, le cours de la température du point neutre et le cours de la température de la sensibilité.

3. Capteur de pression selon la revendication 1, caractérisé en ce que le réseau est constitué de plusieurs groupes qui présentent au moins une résistance (51, 27) et au moins un composant semi-conducteur (28), que l'on peut faire claquer en faisant passer le courant.

4. Capteur de pression selon la revendication 3, caractérisé en ce que le composant semi-conducteur (28) est une diode Zener.

5. Capteur de pression selon l'une des revendications 1 à 4, caractérisé en ce que l'on dispose sur la pastille de silicium (20) en outre un circuit logique numérique de sélection (29) pour sélectionner l'un des éléments (27, 28, 51) du groupe correspondant du réseau (70).

6. Capteur de pression selon l'une des revendications 1 à 5, caractérisé en ce que la pastille de silicium monocristalline (20) présente un circuit de stabilisation (23), en particulier servant à alimenter le circuit en pont avec une intensité ou une tension.

7. Capteur de pression selon l'une des revendications 1 à 6, caractérisé en ce que le poinçon (18) repose à peu près au milieu du circuit en pont.

8. Capteur de pression selon l'une des revendications 1 à 7, caractérisé en ce que la zone (34), dans laquelle repose le poinçon, est une membrane obtenue par décapage à partir de la pastille de silicium (20).

9. Capteur de pression selon l'une des revendications 1 à 8, caractérisé en ce que l'on met un élément intermédiaire (36), servant à transmettre la force à l'élément de mesure (19, 21, 35) au milieu du circuit en pont.

10. Capteur de pression selon la revendication 9, caractérisé en ce que l'élément intermédiaire (36) consiste en une seconde pastille de silicium.

11. Capteur de pression selon l'une des revendications 1 à 10, caractérisé en ce que le poinçon (18) à l'extrémité tournée vers la pastille (20) est en une matière relativement molle.

12. Capteur de pression selon l'une des revendications 9 à 11, caractérisé en ce que l'élément intermédiaire (36) est relié par un procédé de liaison direct ou anodique à la pastille de silicium (20).

13. Capteur de pression selon l'une des revendications 9 à 12, caractérisé en ce que l'élément intermédiaire (36) présente une mésastructure (32) obtenue par décapage.

14. Capteur de pression selon l'une des revendications 1 à 13, caractérisé en ce que le poinçon (18) est en vitrocéramique.
